# DEMANDE DE BREVET EUROPEEN

(11) **EP 0 638 755 A1**
(43) Date de publication de la demande: **15.02.1995**
(21) Numéro de dépôt: 94401762.3
(22) Date de dépôt: 01.08.1994
(51) Int. Cl.: F16L 55/033, F01N 1/24, F24F 13/24

(54) **Dispositif de silencieux pour un flux gazeux**

(30) Priorité: 02.08.1993 FR 9309494
(71) Demandeur: Giudicelli, Pascal, F-78530 Buc (FR)
(72) Inventeur: Giudicelli, Pascal, F-78530 Buc (FR)
(74) Mandataire: Dronne, Guy

(57) **Abrégé**

L'invention concerne un dispositif de silencieux caractérisé en ce qu'il comprend:
une paroi externe (10) étanche à la vapeur;
une couche (12) de matériau absorbant les sons en forme de tube disposée à l'intérieur de ladite paroi externe et présentant une face externe en regard de ladite paroi externe et une face interne;
une paroi interne (14) disposée en regard de la face interne de la couche de matériau absorbant et dont la longueur est supérieure à celle de ladite couche, ladite paroi interne étant réalisée en un matériau souple étanche au gaz et présentant une épaisseur réduite pour permettre l'application des vibrations sonores du flux de gaz circulant dans ladite paroi interne à ladite couche absorbante;
des moyens (16) pour maintenir ladite paroi interne dans une forme donnée;
une première extrémité de raccordement de solidarisation desdites parois interne et externe; et
une deuxième extrémité de raccordement de solidarisation des parois interne et externe.

## Description

La présente invention a pour objet un dispositif de silencieux pour flux gazeux.

De façon plus précise, l'invention concerne un dispositif qui permet de réduire très considérablement le bruit provoqué par les vibrations d'un gaz mis en circulation dans une conduite et notamment mais non exclusivement dans une conduite d'une installation de conditionnement d'air de locaux.

On connaît déjà des dispositifs de silencieux que l'on peut qualifier de piège à son. Ces silencieux sont le plus souvent constitués par une matière isolante, le plus souvent de la laine de verre ou de la laine de roche, qui est séparée du canal dans lequel s'écoule le flux de gaz par une paroi interne constituée par un tube perforé ou une gaine perforée. Ce tube ou cette gaine sont soit métalliques, soit en aluminium ou en galvanisé, soit encore constitués par un film perforé ou moustiquaire armée avec le cas échéant existence d'une "chaussette" ou tube non armé en matière plastique placé entre la moustiquaire et la matière isolante. Il existe également des formes plus complexe où la paroi interne est formée d'un anneau tubulaire qui ménage entre eux des chambres d'expansion qui sont soit totalement ouvertes vers le canal d'écoulement du gaz, soit fermés par un revêtement perforé.

Toutes ces solutions présentent plusieurs inconvénients. Ces dispositions entraînent une perte de charge non négligeable du flux gazeux en circulation. Cela perturbe donc le fonctionnement général de l'installation.

En outre, la partie disposée derrière la paroi interne perforée se comporte également comme un piège des micro-organismes de l'air qui circule dans le silencieux. En outre, ces dispositions n'empêchent pas le passage de l'humidité contenue dans l'air vers la matière isolante qui piège cette humidité. En outre, la substance absorbant les sons subit une érosion du fait du passage du flux d'air, ce qui peut provoquer l'arrachement de particules du matériau absorbant et des micro-organismes piégés dans celui-ci, ces particules arrachées étant mises en circulation dans l'installation de conditionnement d'air.

Un objet de la présente invention est de fournir un dispositif de silencieux qui permette d'obtenir un taux d'atténuation du son au moins égal à ceux qu'on obtient avec des techniques antérieures et même meilleures tout en évitant les inconvénients mentionnés ci-dessus.

Pour atteindre ce but, selon l'invention, le dispositif de silencieux pour un flux gazeux se caractérise en ce qu'il comprend :
une paroi externe étanche à la vapeur ;
une couche de matériau absorbant les sons en forme de tube disposée à l'intérieur de ladite paroi externe et présentant une face externe en regard de ladite paroi externe et une face interne ;
une paroi interne disposée en regard de la face interne de la couche de matériau absorbant et dont la longueur est supérieure à celle de ladite couche, ladite paroi interne étant réalisée en un matériau souple étanche au gaz et présentant une épaisseur réduite pour permettre l'application des vibrations sonores du flux de gaz circulant dans ladite paroi interne à ladite couche absorbante ;
des moyens pour maintenir ladite paroi interne dans une forme donnée ;
une première extrémité de raccordement de solidarisation des parois interne et externe ; et
une deuxième extrémité de raccordement de solidarisation des parois interne et externe.

On comprend que, grâce aux dispositions de la présente invention et plus précisément grâce à la présence de la paroi interne, l'ensemble des matériaux absorbants est totalement protégé du flux gazeux s'écoulant à l'intérieur du silencieux. En revanche, cette paroi interne a des caractéristiques mécaniques telles que l'intégralité des vibrations sonores du flux s'écoulant dans le dispositif de silencieux est transmise au matériau absorbant qui joue alors exactement le même rôle que dans les dispositifs classiques.

De préférence, la paroi interne a une épaisseur comprise entre 6 et 17 microns.

Selon un premier mode de mise en oeuvre, les moyens pour maintenir la forme cylindrique de la paroi interne comprennent un fil métallique à ressort en forme d'hélice solidaire de la face externe de la paroi interne, la couche de matériau absorbant étant alors libre entre les parois interne et externe.

Selon un deuxième mode de mise en oeuvre, les moyens pour maintenir la forme donnée de la paroi interne comprennent des moyens de collage de la paroi interne sur la face interne de ladite couche de matériau absorbant les sons.

Selon une variante de ce deuxième mode de mise en oeuvre, le dispositif de silencieux comprend en outre une gaine interne de forme générale cylindrique dont les extrémités sont solidaires des extrémités desdites parois, ladite gaine étant disposée à l'intérieur de ladite paroi interne et étant réalisée avec un matériau souple apte à transmettre les vibrations du flux circulant dans le dispositif de silencieux et étant renforcée par des moyens de maintien en forme qui sont de préférence un fil métallique hélicoïdal. En outre, grâce à sa structure, le silencieux peut être coudé.

Plus généralement, le fil d'armature a la forme voulue pour donner à la paroi interne, en section droite, la forme souhaitée, circulaire, ovale, rectangulaire. Le fil métallique peut également être déformable pour qu'on puisse lui donner la forme voulue.

D'autres caractéristiques et avantages de la présente invention apparaîtront mieux à la lecture de la description qui suit de plusieurs modes de réalisation de l'invention donnés à titre d'exemples non limitatifs. La description se réfère aux figures annexées sur lesquelles :
- la figure 1 est une vue en coupe longitudinale du silencieux selon un premier mode de réalisation ;
- la figure 2 est une vue en coupe longitudinale du silencieux selon un deuxième mode de réalisation ;
- la figure 3 est une vue en coupe longitudinale d'une variante du deuxième mode de réalisation du silencieux ; et
- la figure 4 est une vue en coupe longitudinale d'un troisième mode de réalisation du silencieux.

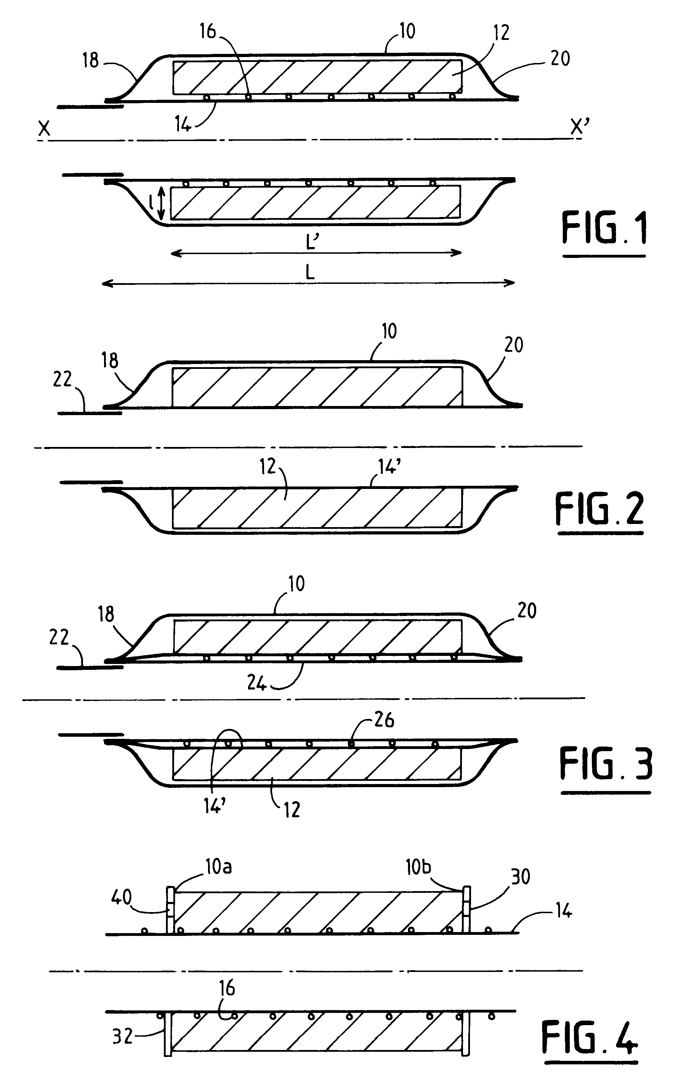

En se référant tout d'abord à la figure 1, on va décrire un premier mode de réalisation du dispositif de silencieux. Celui-ci comprend une paroi externe ou manchon externe 10 qui est de préférence cylindrique de révolution autour de l'axe XX' du silencieux. Cette paroi externe est de préférence réalisée en un complexe contrecollé de polyester et d'aluminium de manière à obtenir ainsi une paroi étanche à la vapeur et, de préférence, au gaz. Dans un mode préféré de réalisation, le film de polyester a une épaisseur de 7 microns et le film d'aluminium a une épaisseur de 12 microns.

Dans un exemple de réalisation, le diamètre externe de la paroi externe 10 est de 203 mm. Cette paroi externe bénéficie du classement au feu Mo ou M1. A l'intérieur de la paroi externe 10, on trouve une couche de matériau isolant 12 en forme de tube présentant le même axe de révolution XX' que la paroi externe 10. Le matériau isolant au son 12 est par exemple une mousse souple commercialisée sous la marque ILLTEC qui est élaborée à partir d'une résine aminoplaste. L'épaisseur e de la couche 12 de matériau isolant au son est par exemple de 20 mm. La densité iso de ce matériau est de 10kg/m3 ; elle résiste aux solvants organiques et a de nombreux acides dilués ainsi qu'aux alcalins. Elle présente également une stabilité thermique permanente de -60°C à +150°C. Son classement au feu est M1.

En variante, le matériau absorbant pourrait être de la laine de verre ou de la laine de roche ou toute autre matièreisolante phonique.

Enfin, le dispositif de silencieux comporte une paroi interne 14 également cylindrique de révolution autour de l'axe XX' qui est de préférence constituée par un complexe contrecollé d'un film polyester et d'un film d'aluminium étanche aux gaz et de classement au feu Mo ou M1. Cette paroi est également étanche aux micro-organismes et aux micro-particules. L'épaisseur totale de cette paroi interne 14 est de préférence inférieure à 17 microns. Dans un mode préféré de réalisation, le film polyester a une épaisseur de 6 microns et le film d'aluminium une épaisseur de 7 microns. La paroi interne 14 qui a ainsi une épaisseur très réduite est maintenue dans sa forme cylindrique dans ce mode de réalisation par une armature hélicoïdale 16 en fil d'acier à ressort à pas longitudinal important, environ 50 mm. Ce fil métallique est collé ou fixé par tout moyen convenable sur la face externe de la paroi interne 14. On comprend que bien que le fil 16 maintienne la paroi interne dans sa forme cylindrique du fait du pas important du fil hélicoïdal, celui-ci n'empêche pas la transmission à travers la paroi interne très mince des ondes sonores du flux gazeux circulant dans le silencieux au matériau absorbant 12.

Dans un mode préféré de réalisation, la paroi interne 14 a un diamètre de 160 mm et présente des propriétés de résistance au feu Mo ou M1.

Les parois interne 14 et externe 10 ont une longueur supérieure à celle du matériau absorbant. Leurs deux extrémités 18 et 20 sont collées ou solidarisées entre elles comme le montre la figure 1. Le matériau absorbant 12 est alors totalement enfermé entre les deux parois. De préférence, l'extrémité 18 de la partie fonctionnelle du silencieux est montée sur un manchon de raccordement 22 qui est de préférence déformable pour s'adapter à la forme des gaines et des viroles de l'installation. Un autre manchon non représenté peut être monté à l'autre extrémité 20 du silencieux.

On obtient ainsi un silencieux qui présente de nombreux avantages par rapport à ceux de l'art antérieur. En ce qui concerne les qualités d'hygiène de ce silencieux, elles résultent du fait qu'il ne se comporte pas comme un piège à micro-organismes. En effet, la paroi interne 14 est lisse et sans aspérité. Il n'y a aucune possibilité de passage de l'air vers la couche de matériau absorbant du fait de l'étanchéité au gaz de la paroi interne 14 et le flux gazeux circulant dans le silencieux ne peut arracher des particules au matériau absorbant et donc risquer d'entraîner les micro-organismes qui auraient pu s'y fixer.

En outre du fait que la paroi interne est lisse, le silencieux ne provoque aucune perte de charge significative du flux gazeux et n'augmente donc pas l'énergie nécessaire au fonctionnement de l'installation et ne constitue pas elle-même un piège pour les micro-organismes.

En se référant à la figure 2, on va décrire un deuxième mode de réalisation du silencieux. Ce mode de réalisation diffère du premier par le fait que la paroi interne qui porte la référence 14' est collée sur la face interne du tube de matériau absorbant 12. La résistance mécanique du tube 12 assure le maintien de la forme de la paroi interne 14' qui est cylindrique et/ou déformable (ovale, rectangulaire, etc.). Il n'est donc plus nécessaire de prévoir une armature pour cette paroi interne.

On comprend que ce deuxième mode de réalisation du silencieux présente tous les avantages du premier.

La figure 3 illustre un troisième mode de réalisation qui combine les modes de réalisation de la paroi interne des figures 1 et 2. La paroi interne est double. Elle est constituée par la paroi interne 14' de la figure 2 qui est directement collée sur la face interne du matériau absorbant 12 et par une gaine constituée par une paroi souple déformable 24 identique à la paroi 14 de la figure 1 et qui est munie d'une armature constituée de préférence par un fil métallique hélicoïdal 26. Les vibrations sonores du flux gazeux sont transmises par la gaine 24 à la paroi 14' qui les transmet à son tour au matériau absorbant 12.

En se référant maintenant à la figure 4, on va décrire un troisième mode de réalisation du silencieux qui se distingue essentiellement des deux premiers par le mode de réalisation de la couche absorbante.

Dans l'exemple décrit, le silencieux comprend une paroi lisse 14 renforcée par un fil métallique 16 identique à celle de la figure 2. Il comprend de plus deux plaques d'extrémité 30 et 32 munies de trous 34 et 36 par lesquelles passent les extrémités de la paroi interne 14. Une étanchéité aux liquides est réalisée entre la gaine et les plaques. Les extrémités 10a et 10b de la paroi externe sont fixées de façon étanche sur les plaques d'extrémité 30 et 32. On définit ainsi un volume annulaire 38 fermé entre les parois 14 et 10 et les plaques d'extrémité 30 et 32.

La plaque 32 est munie d'un orifice 40 d'introduction. On introduit dans le volume 38 une matière absorbant les sons, par exemple du type laine de verre, sous forme de flocons ou une mousse injectable. Cette matière remplit uniformément tout l'espace 38 qui, après compactage ou solidification, constitue une couche dense d'isolation phonique.

On sait qu'on a déjà proposé de réaliser les installations de climatisation de locaux par des conduites constituées par deux gaines accolées respectivement pour le soufflage de l'air et sa reprise, ces deux gaines étant logées dans une gaine externe.

On comprend que l'invention s'adapte très bien à la réalisation d'un silencieux sur une telle installation. Il suffit de mettre en place deux plaques comportant chacune deux orifices pour le passage des deux gaines internes et raccordées de facon étanche à la gaine externe. Dans le volume fermé ainsi défini, il suffit alors de procéder à l'introduction du matériau absorbant comme on l'a déjà expliqué en liaison avec la figure 4.

On comprend que, quel que soit le mode de réalisation envisagé, une paroi étanche au gaz et donc aux micro-organismes sépare le matériau absorbant du flux gazeux tout en laissant passer la quasi intégralité des vibrations sonores du flux gazeux. Enfin cette paroi est maintenue avec une forme stable, notamment cylindrique de telle manière qu'elle n'induise pas elle-même des vibrations par sa propre déformation, par exemple sous l'effet de variations de pression dans le silencieux.

## Revendications

1. Dispositif de silencieux pour un flux gazeux, caractérisé en ce qu'il comprend :
une paroi externe (10) étanche à la vapeur ;
une couche de matériau (12, 38) absorbant les sons en forme de tube disposée à l'intérieur de ladite paroi externe et présentant une face externe en regard de ladite paroi externe et une face interne ;
une paroi interne (14, 14') disposée en regard de la face interne de la couche de matériau absorbant (12) et dont la longueur est supérieure à celle de ladite couche, ladite paroi interne étant réalisée en un matériau souple étanche au gaz et présentant une épaisseur réduite pour permettre l'application des vibrations sonores du flux de gaz circulant dans ladite paroi interne à ladite couche absorbante ;
des moyens (16) pour maintenir ladite paroi interne dans une forme donnée ;
une première extrémité (18) de raccordement de solidarisation desdites parois interne et externe ; et
une deuxième extrémité (20) de raccordement de solidarisation des parois interne et externe.

2. Dispositif de silencieux selon la revendication 1, caractérisé en ce que ladite paroi interne (14, 14') a une épaisseur inférieure à 17 microns.

3. Dispositif de silencieux selon la revendication 2, caractérisé en ce que ladite paroi interne est constituée par un film de polyester recouvert d'un film d'aluminium.

4. Dispositif de silencieux selon la revendication 2, caractérisé en ce que la paroi interne est constituée par un film de polyester de 5 à 7 microns.

5. Dispositif de silencieux selon la revendication 3, caractérisé en ce que l'épaisseur du film de polyester est comprise entre 5 et 7 microns et en ce que l'épaisseur du film d'aluminium est comprise entre 7 et 12 microns.

6. Dispositif de silencieux selon l'une quelconque des revendications 1 à 5, caractérisé en ce que les moyens pour maintenir la forme de la paroi interne comprennent un fil métallique (16) en forme d'hélice à section droite convenable solidaire de la face externe de la paroi interne.

7. Dispositif de silencieux selon l'une quelconque des revendications 1 à 5, caractérisé en ce que les moyens pour maintenir la forme de la paroi interne comprennent des moyens de collage de ladite paroi sur la face interne de ladite couche de matériau absorbant les sons.

8. Dispositif de silencieux selon l'une quelconque des revendications 1 à 7, caractérisé en ce que ledit matériau absorbant les sons est une mousse souple élaborée à partir d'une résine aminoplaste.

9. Dispositif de silencieux selon l'une quelconque des revendications 1 à 7, caractérisé en ce que le matériau absorbant (12) est de la laine de verre ou de la laine de roche.

10. Dispositif de silencieux selon la revendication 7, caractérisé en ce qu'il comprend en outre une gaine (24) de forme géométrique adaptable dont les extrémités sont solidaires desdits manchons, ladite gaine étant disposée à l'intérieur de ladite paroi interne (14') et étant réalisée avec un matériau souple apte à transmettre les vibrations sonores du flux circulant dans le dispositif de silencieux et étant renforcé par des moyens de maintien en forme qui sont de préférence un fil métallique (26) ayant la forme convenable.

11. Dispositif de silencieux selon l'une quelconque des revendications 1 à 5, caractérisé en ce qu'il comprend en outre deux plaques d'extrémité (30, 32) munies chacune d'un orifice (34, 36) par lequel peut passer une extrémité de la paroi interne et auxquelles sont raccordées les extrémités de la paroi externe, et en ce que la couche de matériau absorbant est obtenue par introduction d'un matériau absorbant dans le volume limite par les parois interne et externe et les plaques d'extrémité.

12. Dispositif de silencieux selon la revendication 11, caractérisé en ce qu'il comprend une deuxième paroi interne disposée parallèlement à la première, en ce que chaque plaque d'extrémité comporte un deuxième orifice par lesquels passent les extrémités de la deuxième paroi interne et en ce que le matériau absorbant est introduite dans le volume limité par la paroi externe et les plaques d'extrémité et entourant les parois internes.

13. Dispositif de silencieux selon l'une quelconque des revendications 1 à 12, caractérisé en ce qu'il a dans son ensemble des propriétés au feu Mo ou M1.

14. Dispositif de silencieux selon l'une quelconque des revendications 1 à 13, caractérisé en ce que ladite paroi externe (10) est étanche au gaz et présente des propriétés au feu Mo ou M1.

15. Dispositif de silencieux selon l'une quelconque des revendications 1 à 14, caractérisé en ce que ladite paroi interne (14, 14') est étanche à l'humidité, aux micro-organismes et micro-particules.

16. Dispositif de silencieux selon l'une quelconque des revendications 1 à 15, caractérisé en ce que la face interne de la paroi interne est lisse.
